# EUROPEAN PATENT APPLICATION

(11) **EP 2 843 569 A1**
(43) Date of publication of application: **04.03.2015**
(21) Application number: 13781519.7
(22) Date of filing: 25.04.2013
(51) Int. Cl.: G06F 17/30

(54) **METHOD AND APPARATUS FOR ACCESSING APPLICATION**

(30) Priority: 26.04.2012 CN 201210126600
(71) Applicant: Tencent Technology Shenzhen Company Limited, Shenzhen, Guangdong 518044 (CN)
(72) Inventor: WANG, Qing, Shenzhen Guangdong 518044 (CN); LUO, Zhanghu, Shenzhen Guangdong 518044 (CN); HUANG, Zefeng, Shenzhen Guangdong 518044 (CN); GUO, Haoran, Shenzhen Guangdong 518044 (CN); XIAO, Quanhao, Shenzhen Guangdong 518044 (CN); YUAN, Yixia, Shenzhen Guangdong 518044 (CN); SONG, Jiashun, Shenzhen Guangdong 518044 (CN); LI, Pengtao, Shenzhen Guangdong 518044 (CN); DAI, Yunfeng, Shenzhen Guangdong 518044 (CN); ZHAN, Xunchang, Shenzhen Guangdong 518044 (CN); LIN, Chunyou, Shenzhen Guangdong 518044 (CN)
(74) Representative: Körber, Martin Hans
(86) International application number: PCT/CN2013/074741
(87) International publication number: WO 2013/159725

(57) **Abstract**

The present disclosure provides a method and an apparatus for accessing an application program, belongs to information security technical field. The method includes: an application program installed in a user device is monitored; if it is monitored that a user requests to access the application program, it is determined whether the application program is encrypted; if the application program that the user requests to access is encrypted, the user is requested to input verification information, it is determined whether the verification information is correct; if the verification information is correct, the application program that the user requests to access is run and a running result is presented; and if the verification is not correct, a protection operation is performed to the application program that the user requests to access. The solution effectively prevents malicious access of other users to the application program and ensures security of user information in the application program.

## Description

This application claims the benefit of Chinese Patent Application No. 201210126600.3, filed April 26, 2012, entitled "method and apparatus for accessing application", the disclosure of which is incorporated herein in its entirety by reference.

### FIELD OF THE DISCLOSURE

The present disclosure relates to information security techniques, and more particularly, to a method and an apparatus for accessing an application program.

### BACKGROUND OF THE DISCLOSURE

User devices such as cell phone, palmtop computer or personal digital assistant (PDA) have become a tool of modern people for exchanging information and recording events. The user devices store a large amount of personal information and play an increasingly important role in people's daily life.

Generally, the personal information recorded and stored in the user device is presented by an application program installed in the user device in advance. For example, network browsing history of the user is presented by a browser client installed in the user device. Book reading record of the user is presented by a reader client installed in the user device. Information such as game level or equipment of the user is presented by a game program client installed in the user device, as so on.

In an existing technique, an application program (e.g., browser, reader or game program) which does not provide a password authentication procedure can be opened randomly. Thus, user information in this kind of application programs could be obtained maliciously.

### SUMMARY OF THE DISCLOSURE

In view of the above problem, examples of the present disclosure provide a method and an apparatus for accessing an application program. The technical solution is as follows.

According to an example of the present disclosure, a method for accessing an application program is provided. The method includes:
monitoring an application program installed in a user device;
if it is monitored that a user requests to access the application program, determining whether the application program is encrypted;
if the application program that the user requests to access is encrypted, requesting the user to input verification information, determining whether the verification information is correct;
if the verification information is correct, running the application program that the user requests to access and presenting a running result; and
if the verification is not correct, executing a protection operation to the application program that the user requests to access.

The method further includes:
before monitoring the application program installed in the user device,
determining a relationship between the application program and an encryption level, wherein the encryption level is used for indicating whether the application program is encrypted, the encryption level comprises unencrypted, encrypted, hidden, or hidden and encrypted.

If the encryption level of the application program is hidden or is encrypted and hidden, hiding a user interface (UI) interface of the application program.

The method further includes:
after hiding the UI interface of the application program,
receiving an application program hidden cancellation request transmitted by the user, requesting the user to input a password, and verifying the password;
if the password is correct, displaying the hidden U I interface of the application program again.

The determining whether the application program that the user requests to access is encrypted includes:
querying a relationship between the application program that the user requests to access and the encryption level to obtain the encryption level of the application program that the user requests to access, and determining whether the application program is encrypted according to the encryption level of the application program.

The executing the protection operation to the application program if the verification is not correct includes:
prompting the user to input the verification information again and returning to the process of determining whether the verification information is correct;
if the user has inputted error verification information for a predefined number of times, forbidding the running of the application program, or, outputting prompt information prompting the user that the application program cannot be accessed.

The outputting the prompt information includes:
informing the user that the application program has a fault via voice or a window.

According to another example of the present disclosure, an apparatus for accessing an application program is provided. The apparatus includes: a monitoring module, a first determining module, a verification module, a first executing module and a second executing module; wherein
the monitoring module is adapted to monitor an application program installed in a user device;
the first determining module is adapted to determine, when it is monitored that a user requests to access the application program, whether the application program that the user requests to access is encrypted;
the verification module is adapted to request, if the application program that the user requests to access is encrypted, the user to input verification information and determine whether the verification information is correct;
the first executing module is adapted to run, if the verification information is correct, the application program that the user requests to access and present a running result; and
the second executing module is adapted to execute a protection operation to the application program that the user requests to access if the verification information is not correct.

The apparatus further includes:
a second determining module, adapted to determine a relationship between the application program and an encryption level, wherein the encryption level indicates whether the application program is encrypted, and the encryption level comprises unencrypted, encrypted, hidden, or encrypted and hidden.

A third executing module, adapted to hide a user interface (UI) interface of the application program if the encryption level of the application program is hidden or is encrypted and hidden.

The apparatus further includes:
a fourth executing module, adapted to receive an application program hidden cancellation request transmitted by the user, request the user to input a password, verify the password, and display the hidden application program again if the password is correct.

The second determining module is adapted to query a relationship between the application program that the user requests to access and the encryption level to obtain the encryption level of the application program, and determine whether the application program is encrypted according to the encryption level of the application program.

The second executing module includes:
a first executing unit, adapted to prompt the user to input the verification information again and determine whether the verification information is correct; and
a second executing unit, adapted to forbid the running of the application program if the user has inputted error verification information for a predefined number of times, or output prompt information prompting the user that the application program cannot be accessed.

The second executing unit is adapted to inform the user that the application program has a fault via voice or a window.

According to still another example of the present disclosure, a terminal is provided. The terminal includes an apparatus for accessing an application program as described above.

The terminal is a cell phone, a palmtop computer or a personal digital assistant (PDA).

The technical solution provided by the present disclosure brings out the following advantages. When the user requests to access an application program, verification information inputted by the user is verified. If the verification information is correct, the application program that the user requests to access is run and a running result is presented. If the verification information is not correct, a protection operation is performed to the application program that the user requests to access. The technical solution effectively prevents malicious accessing of other users to the application program and ensures the security of the user information in the application program effectively.

### BRIEF DESCRIPTION OF THE DRAWINGS

Figures used in the descriptions of the following examples are briefly introduced herein to make the technical solution of the present disclosure clearer. It should be noted that, the following figures are merely some examples. Those skilled in the art would get many variations according to these figures without an inventive work.
FIG. 1 is a flowchart illustrating a method for accessing an application program according to a first example of the present disclosure.
FIG. 2 is a flowchart illustrating a method for accessing an application program according to a second example of the present disclosure.
FIG. 3 is a schematic diagram illustrating an apparatus for accessing an application program according to a third example of the present disclosure.
FIG. 4 is a schematic diagram illustrating an apparatus for accessing an application program according to the third example of the present disclosure.
FIG. 5 is a schematic diagram illustrating an apparatus for accessing an application program according to the third example of the present disclosure.

### DETAILED DESCRIPTION OF THE DISCLOSURE

The present disclosure is described in further detail hereinafter with reference to accompanying drawings and examples to make the technical solution and merits therein clearer.

### Example 1

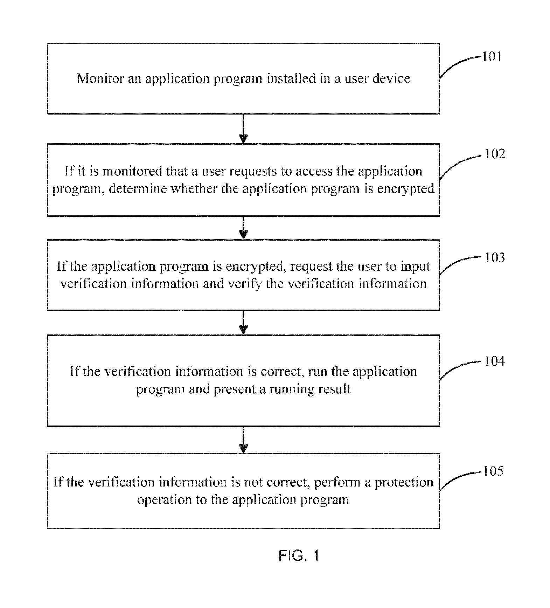

As shown in FIG. 1, this example provides a method for accessing an application program, including the following.

At block 101, an application program installed in a user device is monitored.

At block 102, if it is monitored that a user requests to access the application program, it is determined that whether the application program that the user requests to access is encrypted.

At block 103, if the application program that the user requests to access is encrypted, the user is requested to input verification information and it is determined whether the verification information is correct.

At block 104, if the verification information is correct, the application program that the user requests to access is run and a running result is presented.

At block 105, if the verification information is not correct, a protection operation is performed to the application program that the user requests to access.

The technical solution provided by the example of the present disclosure has the following advantages: when the user requests to access an application program, the verification information inputted by the user is verified. If the verification information is correct, the application program that the user requests to access is run and a running result is presented. If the verification information is not correct, a protection operation is performed to the application program that the user requests to access. It effectively prevents malicious access of other users to the application program. Thus, the security of the user information in the application program is ensured effectively.

### Example 2

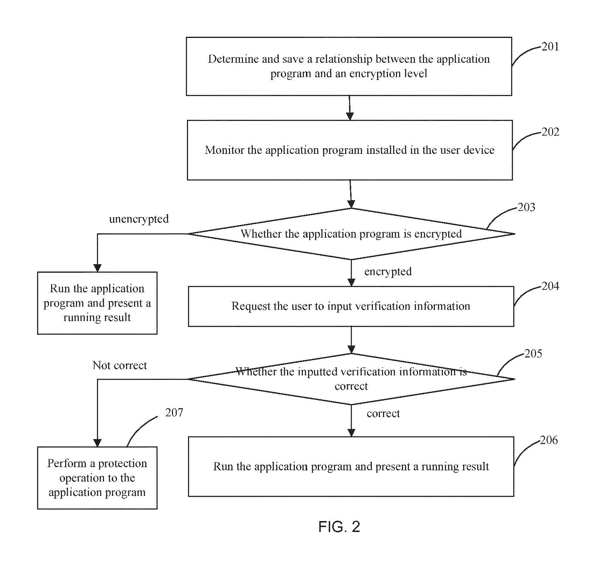

As shown in FIG. 2, this example provides a method for accessing an application program. The execution body of this method is a user device. Further, the method may be implemented by a client application program (e.g., a program lock) installed in the user device. The user device may be a cell phone, a palmtop computer or a personal digital assistant (PDA). The method includes the following.

At block 201, a relationship between an application program and an encryption level is determined and saved, wherein the encryption level indicates whether the application program is encrypted. The encryption level may include: unencrypted, encrypted, hidden, or encrypted and hidden.

In a practical application, this block may include the following.

A program lock accessing request transmitted by the user is received, wherein the program lock is used for manage application programs installed in the user device, e.g., manage configurations of encryption levels of the application programs.

In this example, the program lock may be displayed on the user device in form of a shortcut icon or a folder. The user may issue the program lock accessing request through clicking the shortcut icon or folder.

The program lock is run, an application program list and an encryption level configuration template are displayed; wherein the encryption level configuration template provides encryption levels for the application programs, the user may select and configure encryption levels for the application programs through the displayed application program list and the encryption level configuration template.

An encryption configuration request transmitted by the user is received, wherein the encryption configuration request includes an application program identifier and an encryption level.

If the received encryption level is encrypt, the application program corresponding to the application program identifier is encrypted. In particular, the user is requested to input verification information of the application program identified by the application program identifier. The verification information inputted by the user is received and a relationship between the application program identifier and the verification information is saved, so as to finish the encryption of the application program identified by the application program identifier; wherein the verification information may include an encryption password and a user name or include both of them.

In the example of the present disclosure, application programs with encryption level of encrypt may be encrypted using a uniform encryption password.

The example of the present disclosure protects the application program and avoids malicious access to the application program through encrypting the application program.

If the received encryption level is hidden, the application program corresponding to the application program identifier is hidden. In particular, a user interface (UI) interface of an application program identified by the application program identifier is hidden, wherein the UI interface may be a shortcut icon or folder.

Through hiding the UI interface of the application program, the application program is hidden. Thus, malicious users cannot find the application program, which avoids malicious access to the application program and ensures the security of the user information in the application program to some extent.

If the received encryption level is encrypt and hidden, the application program identified by the application program identifier is encrypted and hid. Detailed encryption and hiding operation may be seen from the above descriptions and is not repeated herein.

The example of the present disclosure implements an encryption and hiding dual protection of the application program through encrypting and hiding the application program, and increases the security level of the application program being accessed.

The configuration of the encryption level of the application program may be implemented through the above manner. Thereafter, the relationship between the application program and the encryption level is saved locally.

At block 202, the application program installed in the user device is monitored.

At block 203, if it is monitored that the user requests to access the application program, it is determined whether the application program is encrypted,
if the application program that the user requests to access is encrypted, block 204 is performed;
if the application program that the user requests to access is not encrypted, the application program that the user requests to access is run and a running result is presented.

During an implementation of the example, the user may request to access the application program through a UI interface of the application program displayed on the user device.

Furthermore, if the UI interface of the application program is hidden, the user transmits an application program hidden cancellation request via the program lock. After the application program hidden cancellation request is received, the user is requested to input a password. The inputted password is verified. If the password is correct, the hidden UI interface of the application program is displayed. Thus, the user may request to access the application program through the displayed UI interface of the application program.

The determining whether the application program that the user request to access is encrypted may include: querying the relationship between the application program and the encryption level according to the application program that the user requests to access to obtain the encryption level of the application program that the user requests to access, determining whether the application program is encrypted according to the encryption level of the application program. If the encryption level of the application program is unencrypted or hidden, determining that the application program is not encrypted; if the encryption level of the application program is encrypted or is encrypted and hidden, determining that the application program is encrypted.

At block 204, the user is requested to input verification information.

For example, when the user clicks the UI interface of the application program on the user device, a window used for inputting the verification information may pop out on an interface of the user device, requesting the user to input the verification information. The popped out window provides an information inputting interface. Thus, the user can input the verification information in the window popped out.

At block 205, it is determined whether the inputted verification information is correct;
if the verification information is correct, block 206 is performed;
if the verification information is not correct, block 207 is performed.

In the example of the present disclosure, the user device stores the correct verification information in advance. After the user inputted verification information is received, the verification information inputted by the user is compared with the pre-stored verification information. If they are the same, the verification of the user inputted verification information succeeds. If they are different, it is determined that the user inputted verification information is not correct.

At block 206, the application program that the user requests to access is run and a running result is presented.

At block 207, a protection operation is performed to the application program that the user requests to access.

The user is prompted to input the verification information again, and the method returns to the process of determining whether the inputted verification information is correct.

If the user has inputted error verification information for a predefined number of times, running of the application program is forbidden, or, prompt information is outputted to prompt the user that the application program cannot be accessed.

The process of outputting the prompt information includes:
notifying the user that the application program has a fault via voice or a window.

The application program in the example of the present disclosure may include a storage space for storing user private information, wherein the user private information may include short message, call record, mail, picture or video.

The technical solution provided by the present disclosure brings out the following advantages. When the user requests to access an application program, verification information inputted by the user is verified. If the verification information is correct, the application program that the user requests to access is run and a running result is presented. If the verification information is not correct, a protection operation is performed to the application program that the user requests to access. The technical solution effectively prevents malicious accessing of other users to the application program and ensures the security of the user information in the application program effectively.

### Example 3

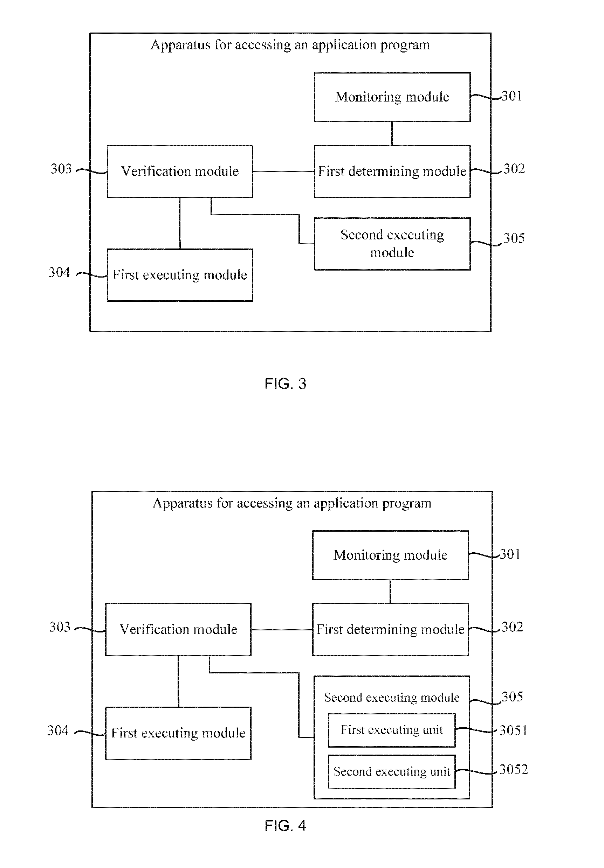

As shown in FIG. 3, an apparatus for accessing an application program is provided. The apparatus includes: a monitoring module 301, a first determining module 302, a verification module 303, a first executing module 304 and a second executing module 305.

The monitoring module 301 is adapted to monitor an application program installed in a user device.

The first determining module 302 is adapted to determine, when it is monitored that a user requests to access the application program, whether the application program that the user requests to access is encrypted.

The verification module 303 is adapted to request, if the application program that the user requests to access is encrypted, the user to input verification information and determine whether the verification information is correct.

The first executing module 304 is adapted to run, if the verification information is correct, the application program that the user requests to access and present a running result.

The second executing module 305 is adapted to execute a protection operation to the application program that the user requests to access if the verification information is not correct.

As shown in FIG. 4, the second executing module 305 in FIG. 3 may include:
a first executing unit 3051, adapted to prompt the user to input the verification information again and determine whether the verification information is correct; and
a second executing unit 3052, adapted to forbid the running of the application program if the user has inputted error verification information for a predefined number of times, or output prompt information prompting the user that the application program cannot be accessed.

In the example, the second executing unit 3052 is adapted to inform the user that the application program has a fault via voice or a window.

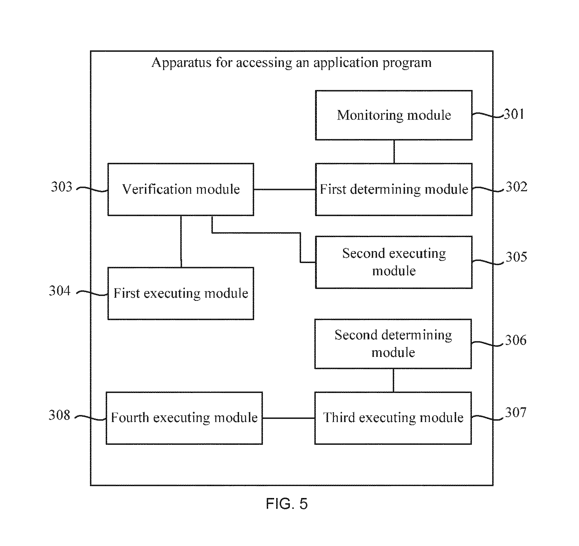

In addition, as shown in FIG. 5, the apparatus in FIG. 3 may further include:
a second determining module 306, adapted to determine a relationship between the application program and an encryption level, wherein the encryption level indicates whether the application program is encrypted, and the encryption level includes unencrypted, encrypted, hidden, or encrypted and hidden;
a third executing module 307, adapted to hide a UI interface of the application program if the encryption level of the application program is hidden or is encrypted and hidden; and
a fourth executing module 308, adapted to receive an application program hidden cancellation request transmitted by the user, request the user to input a password, verify the password, and display the hidden application program if the password is correct.

In this example, the second determining module 306 is adapted to query a relationship between the application program that the user requests to access and the encryption level to obtain the encryption level of the application program, and determine whether the application program is encrypted according to the encryption level of the application program.

An example of the present disclosure also provides a terminal which includes an apparatus for accessing an application program.

The terminal includes but is not limited: cell phone, a palmtop computer, or a personal digital assistant (PDA).

The technical solution provided by the example of the present disclosure has the following advantages: when the user requests to access an application program, the verification information inputted by the user is verified. If the verification information is correct, the application program that the user requests to access is run and a running result is presented. If the verification information is not correct, a protection operation is performed to the application program that the user requests to access. It effectively prevents malicious access of other users to the application program. Thus, the security of the user information in the application program is ensured effectively.

It should be noted that, the apparatus for accessing an application program is described above by taking the division of above functional modules as an example. In a practical application, the functions may be implemented by different modules according to a requirement, i.e., the apparatus may be divided into different functional modules, so as to implement all or some functions described above. In addition, the apparatus for accessing an application program and the method for accessing an application program have the same idea. The detailed implementation of the apparatus may be seen from the method examples and is not repeated herein.

The serial numbers of the examples are merely used for the description but do not represent any preference of the examples.

Those with ordinary skill in the art would know that all or some of the processes of the present disclosure may be implemented by hardware, or implemented by a program executed on a relevant hardware. The program may be stored on a computer readable storage medium. The storage medium may be a read only memory, a disk or a compact disk.

What has been described and illustrated herein is a preferred example of the disclosure along with some of its variations. Many variations are possible within the scope of the disclosure, which is intended to be defined by the following claims -- and their equivalents -- in which all terms are meant in their broadest reasonable sense unless otherwise indicated.

## Claims

1. A method for accessing an application program, comprising:
monitoring an application program installed in a user device;
if it is monitored that a user requests to access the application program, determining whether the application program is encrypted;
if the application program that the user requests to access is encrypted, requesting the user to input verification information, determining whether the verification information is correct;
if the verification information is correct, running the application program that the user requests to access and presenting a running result; and
if the verification is not correct, executing a protection operation to the application program that the user requests to access.

2. The method of claim 1, further comprising:
before monitoring the application program installed in the user device,
determining a relationship between the application program and an encryption level, wherein the encryption level is used for indicating whether the application program is encrypted, the encryption level comprises unencrypted, encrypted, hidden, or hidden and encrypted.
if the encryption level of the application program is hidden or is encrypted and hidden, hiding a user interface (UI) interface of the application program.

3. The method of claim 2, further comprising:
after hiding the UI interface of the application program,
receiving an application program hidden cancellation request transmitted by the user, requesting the user to input a password, and verifying the password;
if the password is correct, displaying the hidden U I interface of the application program again.

4. The method of claim 1, wherein the determining whether the application program that the user requests to access is encrypted comprises:
querying a relationship between the application program that the user requests to access and the encryption level to obtain the encryption level of the application program that the user requests to access, and determining whether the application program is encrypted according to the encryption level of the application program.

5. The method of claim 1, wherein the executing the protection operation to the application program if the verification is not correct comprises:
prompting the user to input the verification information again and returning to the process of determining whether the verification information is correct;
if the user has inputted error verification information for a predefined number of times, forbidding the running of the application program, or, outputting prompt information prompting the user that the application program cannot be accessed.

6. The method of claim 5, wherein the outputting the prompt information comprises:
informing the user that the application program has a fault via voice or a window.

7. An apparatus for accessing an application program, comprising: a monitoring module, a first determining module, a verification module, a first executing module and a second executing module; wherein
the monitoring module is adapted to monitor an application program installed in a user device;
the first determining module is adapted to determine, when it is monitored that a user requests to access the application program, whether the application program that the user requests to access is encrypted;
the verification module is adapted to request, if the application program that the user requests to access is encrypted, the user to input verification information and determine whether the verification information is correct;
the first executing module is adapted to run, if the verification information is correct, the application program that the user requests to access and present a running result; and
the second executing module is adapted to execute a protection operation to the application program that the user requests to access if the verification information is not correct.

8. The apparatus of claim 7, further comprising:
a second determining module, adapted to determine a relationship between the application program and an encryption level, wherein the encryption level indicates whether the application program is encrypted, and the encryption level comprises unencrypted, encrypted, hidden, or encrypted and hidden.
a third executing module, adapted to hide a user interface (UI) interface of the application program if the encryption level of the application program is hidden or is encrypted and hidden.

9. The apparatus of claim 8, further comprising:
a fourth executing module, adapted to receive an application program hidden cancellation request transmitted by the user, request the user to input a password, verify the password, and display the hidden application program again if the password is correct.

10. The apparatus of claim 7, wherein the second determining module is adapted to query a relationship between the application program that the user requests to access and the encryption level to obtain the encryption level of the application program, and determine whether the application program is encrypted according to the encryption level of the application program.

11. The apparatus of claim 7, wherein the second executing module comprises:
a first executing unit, adapted to prompt the user to input the verification information again and determine whether the verification information is correct; and
a second executing unit, adapted to forbid the running of the application program if the user has inputted error verification information for a predefined number of times, or output prompt information prompting the user that the application program cannot be accessed.

12. The apparatus of claim 11, wherein the second executing unit is adapted to inform the user that the application program has a fault via voice or a window.

13. A terminal, comprising an apparatus for accessing an application program as claimed in any one of claims 7 to 12.

14. The terminal of claim 13, wherein the terminal is a cell phone, a palmtop computer or a personal digital assistant (PDA).
